## Europäisches Patentamt

## European Patent Office

## Office européen des brevets

(19)

(11) Veröffentlichungsnummer: **0 339 598**

**A2**

(12) # EUROPÄISCHE PATENTANMELDUNG

(21) Anmeldenummer: **89107540.0**

(22) Anmeldetag: **26.04.89**

(51) Int. Cl.⁴: **H02H 3/10 , H02H 3/20 , H02H 9/00**

(30) Priorität: **27.04.88 DE 3814251**
**19.07.88 DE 3824583**

(43) Veröffentlichungstag der Anmeldung:
**02.11.89 Patentblatt 89/44**

(84) Benannte Vertragsstaaten:
**AT DE FR GB**

(71) Anmelder: **BICC-VERO ELECTRONICS GMBH**
**Carsten-Dressler-Strasse 10**
**D-2800 Bremen 61(DE)**

(72) Erfinder: **Labbus, Jürgen**
**Bremer Strasse 28**
**D-2839 Brake(DE)**
Erfinder: **Bertram, Ralf**
**Moorweg 43**
**D-2942 Jever(DE)**

(74) Vertreter: **Bohnenberger, Johannes, Dr. et al**
**Meissner, Bolte & Partner**
**Widenmayerstrasse 48 Postfach 86 06 24**
**D-8000 München 86(DE)**

(54) **Schutzschaltung für kapazitive Lasten.**

(57) Die DIN-Norm VDE 160/01.86 stellt besondere Anforderungen an die Störspannungsfestigkeit von elektronischen Geräten, die an Starkstromnetzen betrieben werden sollen. Es wird eine Schutzschaltung für kapazitive Lasten aufgezeigt. Hierbei ist eine Stromabtasteinrichtung (11) vorgesehen zum Abtasten des in die Last (10) fließenden Stromes und zum Abgeben eines ersten Sperrsignales mindestens dann, wenn der Betrag des abgetasteten Stromes einen voreingestellten Maximalstrom überschreitet. Eine Spannungsabtasteinrichtung (15-18) ist vorgesehen zum Abtasten der Spannung im Versorgungsnetz und zum Abgeben eines zweiten Sperrsignals dann, wenn der Betrag der abgetasteten Spannung eine voreingestellte Maximalspannung überschreitet. Eine steuerbare Schalteinrichtung (12) ist vorgesehen, die derart ausgebildet ist und in gesteuerter Verbindung mit der Strom- und der Spannungsabtasteinrichtung steht, daß die Last (10) dann vom Versorgungsnetz getrennt wird, wenn mindestens eines der zwei Sperrsignale vorliegt.

FIG. 1

## Schutzschaltung für kapazitive Lasten

Die Erfindung betrifft eine Schutzschaltung für kapazitive Lasten.

Beim Betrieb von elektronischen Anlagen an Wechsel-Versorgungsnetzen ist nicht nur mit sehr kurzen, im hochfrequenten Bereich liegenden Störspannungen zu rechnen, die über klein dimensionierbare Tiefpaßfilter mit hoher Grenzfrequenz ausfilterbar sind, sondern auch mit Störimpulsen, deren Halbwertsdauer im Millisekunden-Bereich liegt. Dies gilt insbesondere dann, wenn am Versorgungsnetz Industriemaschinen, Bahnen, Feuerungsanlagen oder dergleichen betrieben werden. Da die Anstiegsflanken derartiger Störimpulse sehr steil sind, ist die Gefahr der Störung eines elektronischen Gerätes dann besonders hoch, wenn dieses eine kapazitive Last am Netz bildet. Die DIN-Norm VDE 0160/01.86 definiert diese Spannungspulse, so daß ein Verbraucher, der ein elektronisches Gerät erwirbt, das nach dieser Norm geprüft wurde, das Gerät bedenkenlos an einem solchen Netz betreiben kann.

Zum Schutz vor derartigen Störimpulsen kann man nun dem Gerät z. B. einen magnetischen Konstanthalter oder auch nur einen Trenntransformator vorschalten. Zum einen bringt dies aber relativ hohe Kosten mit sich, zum anderen sind derartige Bauteile bei höheren Leistungsanforderungen voluminös, was der in der Elektronik immer angestrebten Miniaturisierung zuwiderläuft.

Aus der DEZ "Elektrotechnik", Juni 1977, H. 11, S. 14-19, sind Schaltungsbeispiele zum Schutz insbesondere eines Gegentakt-Spannungswandlers bekannt. Insbesondere wird dort vorgeschlagen, vor dem Netzgleichrichter einen strombegrenzenden Widerstand zu schalten. Diese Maßnahme führt aber dazu, daß die Zeit zwischen Ankopplung an das Netz und Erreichen der vollen Ausgangsleistung des Gerätes verringert wird. Weiterhin sind in der Schaltung ein Siebkondensator und Schalttransistoren vorgesehen, welche Überströme begrenzen sollen. Die dort getroffenen Maßnahmen sind jedoch nicht geeignet, pulsförmige Überspannungen der eingangs genannten Art in geeigneter Weise abzublocken.

Aus der DD 150 820 ist eine Schaltungsanordnung zur Verringerung des Kurzschlußstromes bei Schaltnetzteilen bekannt, die ein LC-Glied aufweist. Auch diese Schaltung kann pulsförmige Überspannungen nicht abblocken, sondern ist nur zur Kurzschlußsicherung eines Schaltnetzteiles geeignet.

Aus "Schaltbeispiele mit diskreten Halbleiterbauelementen" Fa. Intermetall, Ausgabe 1973/3, S. 158, 159, ist ein Transistorschalter für Wechselstromverbraucher bekannt, der als steuerbaren Schalter eine Transistor im Querzweig einer Brük-

kenschaltung aus antiparallel geschalteten Dioden umfaßt. Zum Abblocken von pulsförmigen Überspannungen ist jedoch diese Schaltung nicht geeignet.

Aus der US 44 14 598 ist eine geregelte Stromversorgung bekannt, die einen Optokoppler zum galvanischen Abtrennen eines Sperrsignales aufweist. Auch mit dieser Anordnung können pulsförmige Überspannungen nicht unterdrückt werden.

Aus der EP-A-130 254 ist es bekannt, daß man eine Schaltung für einen Leitungsunterbrecher mit Strom aus dem Versorgungsnetz versorgen kann. Ein Hinweis auf das Abblocken von pulsförmigen Überspannungen ist dieser Druckschrift nicht entnehmbar.

Ausgehend vom oben genannten Stand der Technik ist es Aufgabe der vorliegenden Erfindung, eine Schutzschaltung der eingangs genannten Art dahingehend weiterzubilden, daß unter Beibehaltung der Entstörungswirkung eine kostengünstige Miniaturisierung ermöglicht wird.

Diese Aufgabe wird durch eine Schutzschaltung gelöst, die eine Stromabtasteinrichtung umfaßt, zum Abtasten des in die Last fließenden Stromes und zum Abgeben eines Sperrsignales dann, wenn der Betrag des abgetasteten Stromes einen voreingestellten Maximalstrom überschreitet, eine Spannungsabtasteinrichtung umfaßt, zum Abtasten der Spannung im Versorgungsnetz und zum Abgeben eines zweiten Sperrsignals mindestens dann, wenn der Betrag der abgetasteten Spannung eine voreingestellte Maximalspannung überschreitet und die eine steuerbare Schalteinrichtung umfaßt, welche derart ausgebildet und in gesteuerter Verbindung mit der Strom- und der Spannungsabtasteinrichtung steht, daß die Last dann vom Versorgungsnetz getrennt wird, wenn mindestens eines der zwei Sperrsignale vorliegt.

Wenn ein Spannungsimpuls der oben beschriebenen Art im Netz auftritt, so steigt aufgrund der kapazitiven Last zunächst der Eingangsstrom schnell an. Sobald der Eingangsstrom den voreingestellten Maximalwert überschreitet, wird die Last vom Netz getrennt, wobei dies aufgrund der in der Last gespeicherten Energie für die Last bzw. das elektronische Gerät noch keine vollständige Unterbrechung der Energieversorgung darstellt. Sobald die Last vom Netz getrennt ist, geht die Spannung auf den vom Netz vorgegebenen Wert. Sobald die Spannung dann den für die Last zulässigen Maximalwert wieder unterschreitet, der Störimpuls also ungefährlich wird, wird die Last wieder mit dem Netz verbunden und in den "Normalbetrieb" überführt.

Besonders vorteilhaft ist der Einsatz dieser Schutzschaltung in primär getakteten Netzgeräten, die einerseits eine (hohe) kapazitive Last darstellen, andererseits eben gerade zur Vermeidung von großen Netztransformatoren konzipiert sind. Bei diesen primär getakteten Netzgeräten besteht das Problem, daß die Auslegung der Eingangsbauteile, insbesondere der Kondensatoren und Leistungstransistoren im Eingangskreis ohnehin schon Problempunkte sind, Die Auslegung dieser Eingangsbauteile derart, daß die von der Norm geforderten Spannungsfestigkeiten erreicht werden, ist aus wirtschaftlichen Gründen praktisch nicht möglich.

Bei der Verwendung der erfindungsgemäßen Anordnung im Zusammenhang mit einem primär getakteten Netzgerät ergibt sich ein weiterer Vorteil dadurch, daß die Schutzschaltung gleichzeitig auch als Strombegrenzung beim Einschalten des Gerätes dient. Zum einen kann die Schutzschaltung so ausgelegt werden, daß sie schneller als die bisher verwendeten NTC's reagiert, zum anderen ist die erfindungsgemäße Schutzschaltung auch dann wirksam, wenn die kapazitive Last mehrmals hintereinander (kurz) ein- und wieder ausgeschaltet wird.

Vorzugsweise wird die Ankopplung der Last an das Netz nicht gleichzeitig (nur durch die Schaltzeiten der verwendeten Bauteile begrenzt) mit dem Unterschreiten des Maximalstroms vorgenommen, sondern erst eine kurze Zeitdauer später. Auf diese Weise kann ein hochfrequentes Schwingen der Bauteile beim erstmaligen Einschalten der Last und damit eine hohe thermische Belastung der Bauteile vermieden werden.

Vorzugsweise ist eine (an sich bekannte) vom Laststrom beaufschlagte Filteranordnung für die eingangs genannten hochfrequenten Störspannungen vorgesehen, die insbesondere bei Verwendung für primär getaktete Netzgeräte auch Rückwirkungen filtert.

Bei Verwendung der Schutzschaltung in primär getakteten Netzgeräten wird die Anordnung dann besonders einfach, wenn sie zwischen dem ohnehin vorgesehenen Gleichrichter und den Eingangskondensatoren des Netzgerätes angeordnet ist, da die Schutzschaltung dann nur für (pulsierenden) Gleichstrom ausgelegt sein muß.

Weitere erfindungswesentliche Merkmale ergeben sich aus den Unteransprüchen und der nachfolgenden Beschreibung bevorzugter Ausführungsformen der Erfindung, die anhand von Abbildungen näher erläutert werden. Hierbei zeigt

Fig. 1 das Prinzip-Blockschaltbild einer Schutzschaltung;

Fig. 2 eine erste bevorzugte Ausführungsform der Erfindung zur Verwendung in einem primär getakteten Netzgerät; und

Fig. 3 eine weitere bevorzugte Ausführungsform der Erfindung zur Verwendung als "Vorschaltgerät";

Fig. 4/5 eine weitere Ausführungsform der Erfindung.

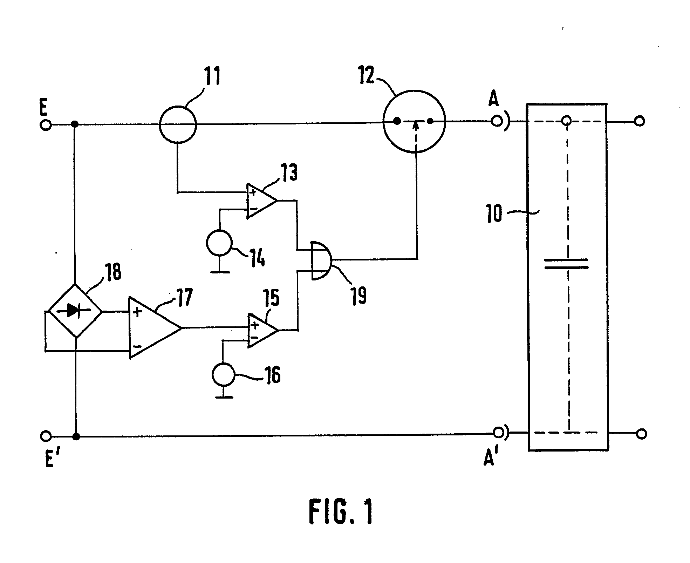

In Fig. 1 bezeichnen E, E' Eingangsklemmen, A, A' Ausgangsklemmen der Schutzschaltung, wobei die Eingangsklemmen E, E' mit dem Versorgungsnetz, die Ausgangsklemmen A, A' mit einer kapazitiven Last 10 verbunden sind. Die Eingangsklemme E' ist mit der Ausgangsklemme A' direkt verbunden, während die Eingangsklemme E über einen steuerbaren Schalter 12 mit der Ausgangsklemme A in Verbindung steht. In der Leitung zwischen der Eingangsklemme E und dem Schalter 12 ist eine Strommeßeinrichtung 11 vorgesehen, die ein Strom-proportionales Ausgangssignal liefert, welches einem ersten Eingang eines ersten Komparators 13 zugeführt wird. Der weitere (invertierende) Eingang des Komparators 13 steht mit dem Ausgang einer Referenzspannungsquelle 14 in Verbindung, so daß an seinem Ausgang immer dann ein hoher Pegel liegt, wenn das (last-)stromproportionale Ausgangssignal der Strommeßeinrichtung den Spannungswert der Referenzspannungsquelle 14 überschreitet.

Mit den Eingangsklemmen E, E' sind die Eingangsklemmen eines Brückengleichrichters 18 verbunden, dessen Ausgangsklemmen auf einen Differenzverstärker 17 mit konstantem Verstärkungsfaktor geführt sind. Der Ausgang des Differenzverstärkers 17, an dem eine, dem Betrag der Wechselspannungsamplitude proportionale Gleichspannung anliegt, ist mit einem Eingang eines weiteren Komparators 15 verbunden, dessen anderer Eingang auf dem Ausgang einer weiteren Referenzspannungsquelle 16 liegt. Immer dann, wenn der Betrag der Spannung an den Eingangsklemmen E, E' den durch die Referenzspannungsquelle 16 definierten Wert überschreitet, geht der Ausgang des Komparators 15 auf hohen Pegel.

Die Ausgänge der Komparatoren 13 und 15 gehen auf zwei Eingänge eines ODER-Gatters 19, dessen Ausgang somit immer dann auf hohem Potential liegt, wenn entweder der Laststrom oder die Eingangsspannung die durch die Referenzspannungsquellen 14, 16 definierten Werte überschreiten.

Der Ausgang des ODER-Gatters 19 ist mit einem Steuereingang des steuerbaren Schalters 12 verbunden. Dieser steuerbare Schalter 12 ist derart ausgelegt, daß er dann öffnet, wenn an seinem Steuereingang hohes Potential liegt.

Die Funktionsweise der in Fig. 1 gezeigten Anordnung ist wie folgt:

Tritt an den Eingangsklemmen ein Störimpuls der oben beschriebenen Art auf, so steigt zunächst der durch den geschlossenen Schalter 12 fließende Laststrom an, so daß das Ausgangssignal der Strommeßeinrichtung 11 ebenfalls ansteigt. Sobald das Ausgangs signal der Strommeßeinrichtung 11 dem Betrag nach den durch die Referenzspannungsquelle 14 vorgegebenen Wert überschreitet, geht der Ausgang des Komparators 13 und damit auch der Ausgang des ODER-Gatters 19 auf hohen Pegel, so daß der Schalter 12 und damit die Last 10 von der Ausgangsklemme A abgetrennt wird. Daraufhin geht die Spannung an den Eingangsklemmen E, E' auf den durch das Netz vorgegebenen Wert, so daß nunmehr die Ausgangsspannung des Komparators 17 den durch die Referenzspannungsquelle 16 vorgegebenen Wert überschreitet und der Ausgang des Komparators 15 auf hohen Pegel geht. Dies bedeutet, daß am Ausgang des ODER-Gatters 19 ein hoher Pegel liegt, der Schalter 12 somit geöffnet bleibt.

Erst dann, wenn die Spannung des Störimpulses den durch die Referenzspannungsquelle 16 vorgegebenen Wert wieder unterschreitet, geht der Ausgang des Komparators 15 auf niedrigen Pegel. Da der Schalter 12 zuvor geöffnet war, liegt auch der Ausgang des Komparators 13 auf niedrigen Pegel, so daß nunmehr der Ausgang des ODER-Gatters 19 auf niedrigen Pegel wechselt. Dadurch wird der Schalter 12 geschlossen und die Last 10 wieder an das Netz angekoppelt und im "Normalbetrieb" weiter mit (Wechsel-)Strom versorgt.

Beim erstmaligen Einschalten der Last 10 - und dies gilt insbesondere dann, wenn die Last 10 von einem primär getakteten Netzgerät gebildet wird - wirkt die Schutzschaltung nach Fig. 1 strombegrenzend. Beim Einschalten, wenn also die Kapazitäten der Last 10 noch keine Ladung enthalten, steigt der Strom durch die Schutzschaltung sprunghaft an. Sobald der Strom den vorgegebenen Grenzwert erreicht, wird der Schalter 12 geöffnet. Da die zu diesem Zeitpunkt abgetastete Eingangsspannung den eingestellten Maximalwert nicht überschreitet und der Strom durch das Öffnen des Schalters 12 sofort wieder unter den kritischen Wert abgesunken ist, wird der Schalter 12 wieder geschlossen, so daß der Strom entsprechend ansteigt und sich dieser Vorgang wiederholt. Die Schaltfrequenz bzw. Wiederholungsfrequenz ist durch die Verzögerungszeiten in den Bauelementen 11, 13, 19 und 12 bestimmt. Wenn der Schalter 12 z. B. einen Transistor umfaßt, so muß zur Vermeidung einer hohen thermischen Belastung der A-Betrieb der Anordnung, also eine echte Konstanthaltung des Eingangsstromes vermieden werden. Dies geschieht bei der Schaltung nach Fig. 1 durch die Schaltcharakteristik des Komparators 13 bzw. des ODER-Gatters 19. Damit weiterhin die Schaltfrequenz nicht zu hoch wird, was wiederum eine thermische Belastung des Schalters 12 während der Schaltübergänge mit sich bringt, ist es von Vorteil, wenn mit einer Einschaltverzögerung beim Schließen des Schalters 12 gearbeitet wird. Dies gilt insbesondere dann, wenn der Laststrom beim (erstmaligen) Einschalten der Last begrenzt werden soll und zwar der Eingangsstrom aber nicht die Eingangsspannung den höchsten zulässigen Wert überschreitet.

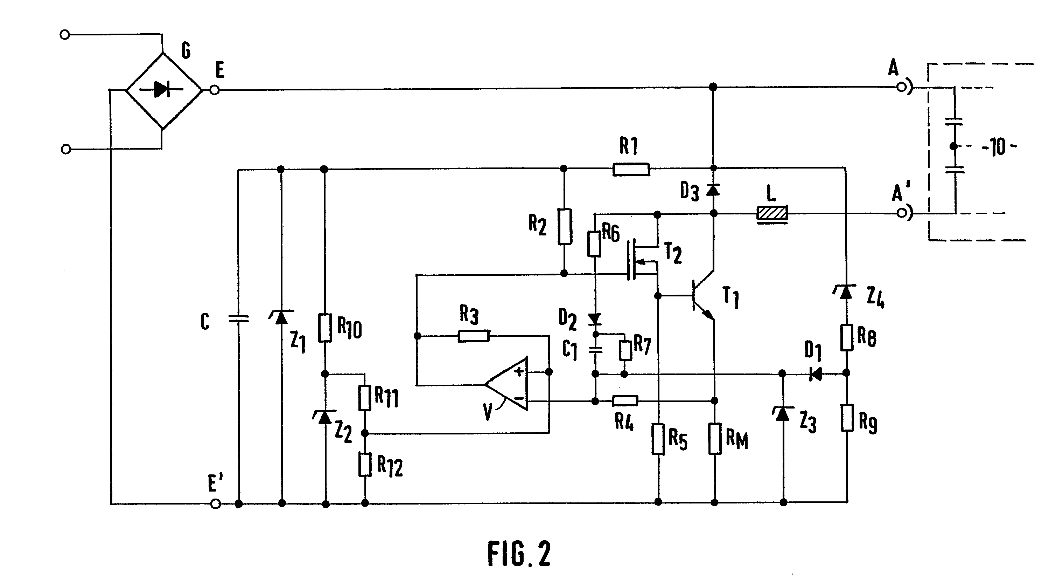

Im folgenden wird eine Schaltung anhand von Fig. 2 beschrieben, die eine bevorzugte Ausführungsform der Erfindung zeigt, wobei hier ein primär getaktetes Netzgerät vor Störimpulsen geschützt werden soll. In diesem Fall sind die Eingangsklemmen E, E' mit den Ausgangsklemmen eines Brückengleichrichters G gekoppelt, der ohnehin im Netzgerät vorgesehen ist. Die eigentliche kapazitive Last 10 liegt an den Ausgangsklemmen A, A' der Schutzschaltung.

Über einen Widerstand R1 liegt eine Parallelschaltung aus einem Speicherkondensator C und einer Zenerdiode Z1 zwischen den Eingangsklemmen E und E'. An den Klemmen des Kondensators C liegt somit eine durch die Zenerdiode Z1 geregelte Gleichspannung, die zur Stromversorgung weiterer Baugruppen dienen kann. Parallel zum Speicherkondensator C liegt eine Reihenschaltung aus einem Widerstand R10 und einer weiteren Zenerdiode Z2. Die Zenerdiode Z2 wird von einer Reihenschaltung aus zwei Widerständen R11 und R12 überbrückt. Am Verbindungspunkt der beiden Widerstände R11 und R12 steht somit eine geregelte Spannung (gegenüber der Klemme E') zur Verfügung, die als Referenzspannung dient. Die Bauteile R10 - R12, Z2 entsprechen somit der Referenzspannungsquelle 16.

Die Eingangsklemme E' ist über einen niederohmigen Meßwiderstand RM mit dem Emitter eines Transistors T1 verbunden, dessen Kollektor über eine Induktivität L (ca. 4 µH) mit der Ausgangsklemme A' verbunden ist. Die Eingangsklemme E ist mit der Ausgangsklemme A direkt verbunden. Der Verbindungspunkt zwischen der Induktivität L und dem Kollektor des Transistors T1 ist über eine Diode D3 mit der Eingangsklemme E verbunden.

Die Basis und der Kollektor des Transistors T1 sind über die Drain-Sorce-Strecke eines FET T2 verbunden, wobei die Basis des Transistors T1 weiterhin über einen Widerstand R5 mit der Eingangsklemme E' verbunden ist.

Die Eingangsklemme E ist weiterhin über eine Reihenschaltung bestehend aus einer Zenerdiode Z4 und zwei Widerständen R8, R9 mit der Eingangsklemme E' verbunden. Der Verbindungspunkt der Widerstände R8, R9 liegt über eine Diode D1 und eine Zenerdiode Z3 auf der Eingangsklemme E'. Der Verbindungspunkt der Diode D1 und der Zenerdiode Z3 ist auf den (negativen) Eingang eines Komparators V geführt, der weiterhin über einen Widerstand R4 auf dem Verbindungspunkt zwischen dem Emitter des Transistors T1 und dem Meßwiderstand RM liegt. Weiterhin liegt der invertierende Eingang des Komparators V über eine Reihenschaltung bestehend aus einem Kondensator C1, einer Diode D2 und einem Widerstand R6 auf dem Kollektor des Transistors T1. Der Verbindungspunkt zwischen dem Kondensator C1 und der Diode D2 ist über einen Widerstand R7 mit dem invertierenden Eingang des Komparators V verbunden.

Der nicht invertierende Eingang des Komparators V ist zum einen mit dem Verbindungspunkt zwischen den Widerständen R11 und R12, zum anderen über einen Widerstand R3 mit seinem Ausgang und mit dem GATE-Anschluß des Transistors T2 verbunden. Außerdem liegt der GATE-Anschluß des Transistors T2 über einen Widerstand R2 am Verbindungspunkt zwischen dem Widerstand R1 und dem Speicherkondensator C.

Die Funktionsweise dieser Anordnung ist wie folgt:

Wenn ein Störimpuls zwischen den Klemmen E, E' auftritt, so steigt der Strom durch den Meßwiderstand RM an, so daß das Potential im invertierenden Eingang des Komparators V ebenfalls ansteigt. Sobald dieses Potential die Spannung am nicht invertierenden Eingang des Komparators V überschreitet, sinkt sein Ausgang auf niedriges Potential, so daß der Transistor T2 sperrt. Damit wird die Basis des Transistors T1 über den Widerstand R5 auf niedriges Potential gebracht, so daß der Transistor T1 ebenfalls sperrt und den Laststrom somit unterbricht.

Sobald der Laststrom unterbrochen ist, steigt die Spannung an den Klemmen E, E', so daß nunmehr die Zenerdiode Z4 leitend wird und somit die Spannung am Verbindungspunkt zwischen den Widerständen R8 und R9 steigt. Diese Spannung liegt über die Diode D1 am invertierenden Eingang des Komparators V und wird über die Zenerdiode Z3 auf einen, für den Komparator V ungefährlichen Wert begrenzt.

Wenn also der Laststrom beim Sperren des Transistors T1 sinkt und damit das Potential am Verbindungspunkt zwischen Meßwiderstand RM und Emitter des Transistors T1 ebenfalls sinkt, so bleibt dennoch der Ausgang des Verstärkes V solange auf negativem Potential (und sperrt die Transistoren), bis die Spannung an den Eingangsklemmen E, E' soweit abgesunken ist, daß die Zenerdiode Z4 wieder sperrt. Hierbei sorgt die Reihenschaltung aus Diode D2 und Kondensator C1, die vom Widerstand R7 überbrückt ist, dafür, daß die Transistoren schnell gesperrt aber verzögert wieder durchgesteuert werden.

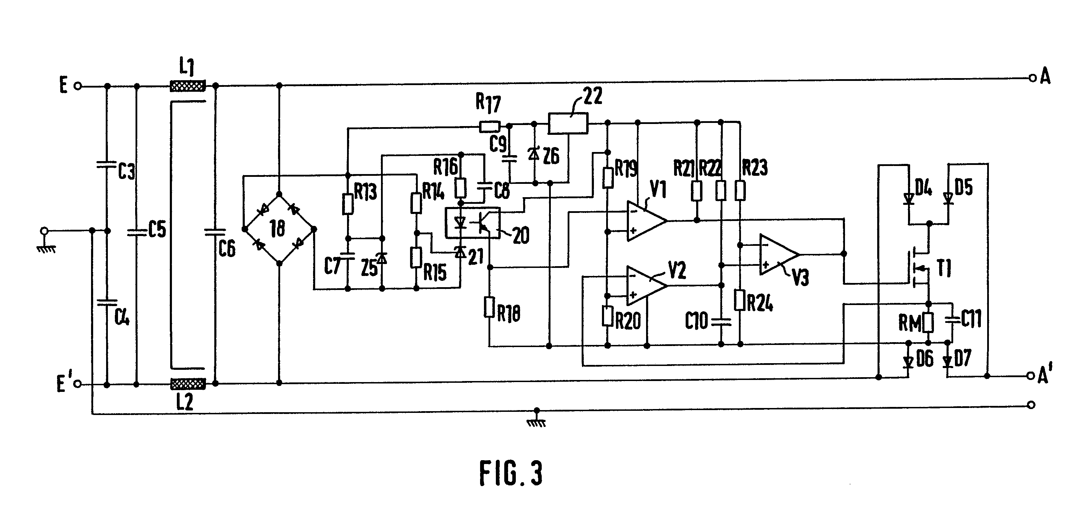

Im folgenden wird eine weitere bevorzugte Ausführungsform der Erfindung anhand von Fig. 3 näher beschrieben. Hierbei handelt es sich um eine Schutzschaltung, die am Ausgang Wechselstrom liefert, also jeder kapazitiven Last vorgeschaltet werden kann.

Bei der in Fig. 3 gezeigten Anordnung ist die Eingangsklemme E mit der Ausgangsklemme A der Schaltung über eine Induktivität L1 verbunden. Die Induktivität L1 ist magnetisch mit einer Induktivität L2 gekoppelt, die zwischen der Eingangsklemme E' und der einen Klemme des steuerbaren Schalters liegt, dessen andere Klemme mit der Ausgangsklemme A' der Schutzschaltung verbunden ist. Der steuerbare Schalter umfaßt eine Diode D6, deren Kathode mit der Eingangsklemme E' und deren Anode über einen Meßwiderstand RM und die Drain-Sorce-Strecke eines Transistors T1 mit der Kathode einer Diode D5 verbunden ist, deren Anode auf der Ausgangsklemme A' liegt. Weiterhin ist die Eingangsklemme E' über die Anoden-Kathoden-Strecke einer Diode D4, die Drain-Sorce-Strecke des Transistors T1, den Meßwiderstand RM und die Anoden-Kathoden-Strecke einer Diode D7 mit der Ausgangsklemme A' verbunden. Parallel zum Meßwiderstand RM ist zur Kompensation seiner (insbesondere bei Drahtwiderständen vorhandenen) Induktivität ein Kondensator C11 geschaltet. Bei durchgesteuertem Transistor T1 fließt somit je nach Stromrichtung der Strom entweder über die Strecke D4, T1, RM und D7 oder über die Strecke D6, RM, T1 und D5.

Zur Entstörung ist eine Reihenschaltung aus zwei Kondensatoren C3, C4 mit den Eingangsklemmen E, E' gekoppelt, deren Verbindungspunkt an Masse liegt. Weiterhin sind zum Filtern sehr schneller Störimpulse Kondensatoren C5, C6 vor und nach den Induktivitäten L1, L2 die beiden Leitungen verbindend vorgesehen.

Zur Stromversorgung der aktiven Bauelemente der Anordnung und zum Abtasten der momentanen Eingangsspannung liegt ein Brückengleichrichter 18 mit seinen Eingangsklemmen an den Ausgangsklemmen der Induktivitäten L1 und L2. Die Ausgangsklemmen des Brückengleichrichters 18 sind mit einer Reihenschaltung, bestehend aus einem Widerstand R13 und einem Kondensator C7 verbunden, wobei der Kondensator C7 über eine Zenerdiode Z5 liegt. Am Verbindungspunkt zwischen dem Widerstand R13 und dem Kondensator C7 liegt somit eine durch die Zenerdiode Z5 stabilisierte Gleichspannung.

Der Verbindungspunkt zwischen dem Widerstand R13 und dem Kondensator C7 ist über eine Parallelschaltung bestehend aus einem Widerstand R16 und einem Kondensator C8 mit der Anode der LED eines Optokopplers 20 verbunden, dessen Kathode auf der Kathode eines Shuntreglers liegt und dessen Anode an der Anode der Zenerdiode Z5 liegt.

Die Ausgangsklemmen des Gleichrichters 18 sind weiterhin über eine Reihenschaltung, bestehend aus zwei Widerständen R14, R15 verbunden. Der Verbindungspunkt zwischen den Widerständen R14 und R15 ist mit dem Steuereingang des Shuntreglers 21 gekoppelt. Der Shuntregler 21 stellt einen Komparator mit eingebauter Referenzspannung dar, der dann durchschaltet, wenn die Spannung zwischen seinem Steuereingang und seiner Anode einen vorbestimmten Wert überschreitet und bei Unterschreiten der Spannung öffnet.

Die Ausgangsklemme des Gleichrichters 18, an der die Widerstände R13 und R14 anliegen, ist über einen Widerstand R17 mit dem Eingang eines Konstantspannungsreglers 22 gekoppelt, dessen Masse-Eingang einerseits über eine Parallelschaltung bestehend aus einem Kondensator C9 und einer Zenerdiode Z6 mit seinem Eingang und andererseits mit dem Verbindungspunkt der Dioden D6 und D7 und dem Meßwiderstand RM gekoppelt ist. Der Ausgang des Reglers 22 liefert eine Konstantspannung, die zur Stromversorgung von drei Open-Kollektor-Komparatoren V1 - V3 dient.

Der Ausgang des Reglers 22 ist weiterhin über die Kollektor-Emitterstrecke des Transistors im Optokoppler 20 und einen Widerstand R18 mit seinem Steuereingang verbunden. Der Verbindungspunkt zwischen dem Optokoppler 20 und dem Widerstand R18 liegt auf dem invertierenden Eingang des ersten Komparators V1, dessen nicht invertierender Eingang auf dem Verbindungspunkt von zwei Widerständen R19, R20 liegt, die zwischen Ausgang und Masseeingang des Reglers 22 geschaltet sind. Auf diesem Verbindungspunkt liegt weiterhin der nicht invertierende Eingang des zweiten Komparators V2, dessen invertierender Eingang mit dem Verbindungspunkt zwischen dem Transistor T1 und dem Meßwiderstand RM liegt.

Der Ausgang des Komparators V1 liegt über einen Widerstand R21 auf dem Ausgang des Reglers 22 und gleichzeitig direkt am Gate des Transistors T1.

Der Ausgang des Komparators V2 ist mit dem Verbindungspunkt einer Reihenschaltung, bestehend aus einem Widerstand R22 und einem Kondensator C10 verbunden, wobei der Widerstand R22 auf dem Ausgang des Reglers 22 und der Kondensator C10 auf dem Masseeingang des Reglers 22 liegt. Mit dem Ausgang des Komparators V2 ist weiterhin der nicht invertierende Eingang des dritten Komparators V3 verbunden, dessen invertierender Eingang an den Verbindungspunkt einer Reihenschaltung bestehend aus zwei Widerständen R23 und R24 gekoppelt ist. Die Reihenschaltung (R23, R24) ist zwischen den Ausgang und den Masseeingang des Reglers 22 geschaltet. Der Ausgang des Komparators V3 ist ebenfalls mit dem Gate des Transistors T1 gekoppelt.

Die Funktionsweise der Anordnung ist wie folgt:

Steigt der durch den Lastwiderstand RM fließende Strom, so steigt das Potential am invertierenden Eingang des Komparators V2. Sobald dieses Potential höher wird als dasjenige am nicht invertierenden Eingang des Komparators, steuert der Ausgangstransistor des Komparators V2 durch, so daß das Potential am nicht invertierenden Eingang des Komparators V3 unter das Potential an seinem invertierenden Eingang absinkt und der Ausgangstransistor des Komparators V3 ebenfalls durchsteuert. Damit wird das Gate des Transistors T1 auf niedriges Potential gebracht und der Transistor T1 sperrt. Im wesentlichen gleichzeitig mit dem Sperren des Transistors T1 steigt die Spannung am Ausgang des Gleichrichters 18, so daß die Spannung über dem Widerstand R15 proportional ansteigt und der Shuntregler 21 durchsteuert, so daß der Lichtsender des Optokopplers 20 über die Parallelschaltung aus Widerstand R16 und Kondensator C8 mit Strom versorgt wird und den Transistor des Optokopplers 20 durchsteuert. Hierbei bewirkt der Kondensator C8 eine Beschleunigung des Schaltvorganges. Sobald der Transistor des Optokopplers 20 durchgesteuert ist, gelangt der invertierende Eingang des Komparators V1 auf hohes Potential (gegenüber seinem nicht invertierenden Eingang), so daß der Ausgangstransistor des Komparators V1 durchgesteuert wird. Selbst dann, wenn der Ausgangstransistor des Komparators V3 wieder öffnet, bleibt der Gate-Anschluß des Transistors T1 auf niedrigem Potential und der Transistor somit gesperrt, bis die Spannung an den Eingangsklemmen E, E' wieder auf einen ungefährlichen Wert absinkt.

Beim erstmaligen Einschalten einer kapazitiven Last läuft der oben beschriebene Vorgang ähnlich ab, wobei allerdings der Ausgangstransistor des Komparators V1 immer gesperrt bleibt, da die Eingangsspannung den durch den Shuntregler 21 vorgegebenen Wert nicht übersteigt. Sobald in diesem Fall der Transistor T1 sperrt und demzufolge die Spannung über dem Meßwiderstand RM wieder sinkt, so daß der Ausgangstransistor des Komparators V2 sperrt, steigt die Spannung am nicht invertierenden Eingang des Komparators V3 an. Diese Anstiegszeit wird aber durch die Zeitkonstante des Tiefpaßfilters, bestehend aus Widerstand R22 und Kondensator C10 bestimmt, so daß eine maximale Schaltfrequenz des Transistors T1 eingestellt wird. In jedem Fall ist durch diese Anordnung sichergestellt, daß der Transistor T1 nicht im A-Betrieb arbeitet. Wesentlich an dieser Anordnung ist dabei, daß das Sperren des Transistors T1 schnell erfolgt (bestimmt durch den Ausgangswiderstand des Komparators V2 und den Kondensator C10), während das Durchsteuern des Transistors T1 verzögert (bestimmt durch R22 und C10) erfolgt.

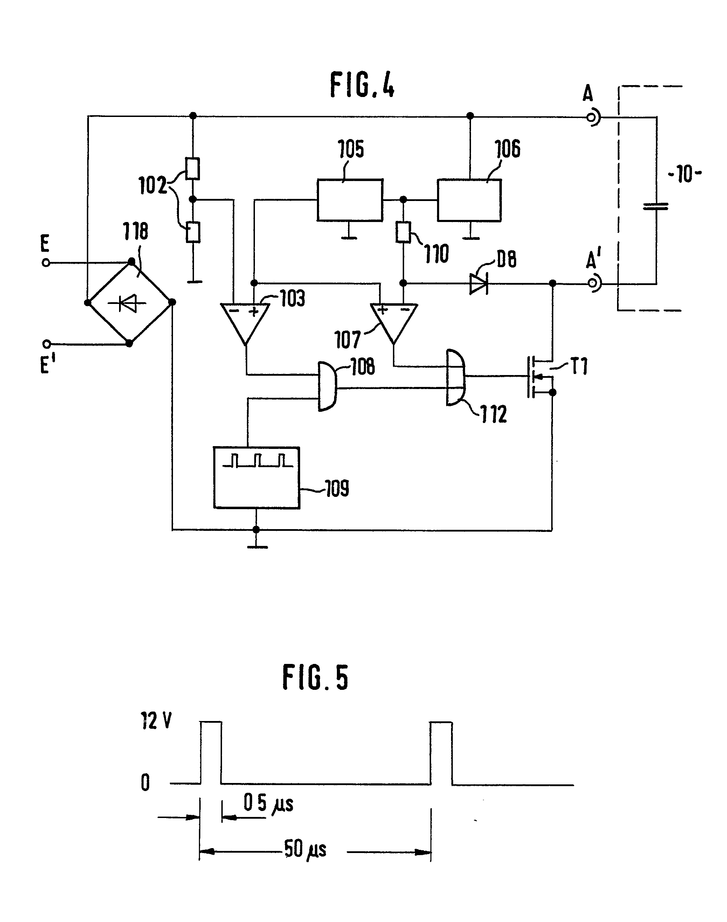

In Fig. 4 wird eine weitere, besonders bevorzugte Ausführungsform der Erfindung gezeigt, die an den Eingangsklemmen E, E' einen Brückengleichrichter 118 aufweist, der mit seinem einen Gleichstrom-Ausgang direkt mit dem Ausgang A und mit seinem anderen Gleichstrom-Ausgang über einen Transistor T1 mit dem Ausgang A' verbunden ist. Der am Transistor T1 liegende Ausgang des Gleichrichters 118 ist auf Masse geführt.

Zwischen dem mit dem Ausgang A verbundenen Ausgang des Gleichrichters 118 und Masse liegt eine Serienschaltung 102 aus zwei Widerständen, an deren die Spannung herunterteilendem Koppelpunkt der invertierende Eingang eines Komparators 103 angeschlossen ist. Der nicht invertierende Eingang des Komparators 103 liegt auf dem Ausgang einer Konstantspannungsquelle 105, die eine Bezugsspannung liefert und mit ihrem eingangsseitigen Anschluß auf einer Hilfsspannungsquelle 106 liegt, die vom Gleichstrom-Ausgang des Gleichrichters 118 versorgt wird. Der Ausgang des Komparators 103 ist auf einen Eingang eines UND-Gatters 108 geführt, dessen anderer Eingang auf dem Ausgang eines Puls-Generators 109 liegt. Der Ausgang des UND-Gatters 108 ist auf den einen Eingang eines ODER-Gatters 112 geführt, dessen Ausgang auf dem GATE-Eingang des Transistors T1 liegt.

Mit der Ausgangsklemme der Konstantspannungsquelle 105 ist weiterhin der nicht invertierende Eingang eines weiteren Komparators 107 verbunden, dessen invertierender Eingang über einen Widerstand 110 auf den Ausgang der Hilfsspannungsquelle 106 geführt ist. Der invertierende Eingang des Komparators 107 liegt weiterhin über eine Diode D8 auf dem Ausgang A'. Der Ausgang des Komparators 107 ist auf den zweiten Eingang des ODER-Gatters 112 geführt.

Der Generator 109 liefert einen periodisch wiederkehrenden schmalen Nadelimpuls, dessen Pulsbreite und Wiederholungsfrequenz so gewählt sind, daß in jedem Fall gefahrlos der Transistor T1 angesteuert werden kann, da sein Strom eine begrenzte Anstiegssteilheit (aufgrund von Leitungsinduktivitäten) hat.

Die beschriebene Schaltung arbeitet folgendermaßen:

Über die Spannungsteilerschaltung 102 wird die aus dem Gleichrichter 118 kommende Gleichspannung auf einen kleineren Wert gebracht und mit der aus der Konstantspannungsquelle 105 (hier als Bezugsspannungsquelle verwendet) kommenden Referenzspannung im Komparator 103 verglichen. Am Ausgang des Komparators 103 erscheint somit nur dann ein positiver Pegel, wenn die Netzspannung den zulässigen Maximalwert nicht übersteigt. Dies bedeutet gleichzeitig, daß die aus dem Generator 109 kommenden Nadelimpulse nur dann durch das UND-Gatter 108 und über das ODER-Gatter 112 auf das GATE des Transistors T1 gelangen, wenn keine Überspannung vorliegt.

Solange kein übergroßer Strom durch den Transistor T1 in die Last 10 fließt, kann dieser vom Ausgangspuls des Generators 109 bzw. dem entsprechenden Ausgangssignal des UND-Gatters 108 und des ODER-Gatters 112 bis zur Sättigungsspannung durchgeschaltet werden und zieht dann mit der Diode D8 die Spannung am Widerstand soweit herunter, daß der Komparator 107 an seinem Ausgang ein positives Signal erzeugt. Dieses positive Signal wird dann über die ODER-Schaltung 112 an das GATE des Schalttransistors T1 gelegt und hält diesen im durchgeschalteten Zustand.

Mit dem Auftreten einer fehlerhaften Überspannung (Störimpuls) im Netz und damit an den Ausgangsklemmen des Gleichrichters 118 steigt der Last- bzw. Ladestrom der am Ausgang A, A' der Schutzschaltung angeschlossenen Last 10 an. Der Ladestrom für die Last, der durch den Transistor T1 fließt, läßt sofort seine Sättigungsspannung ansteigen, so daß über die Diode D8 auch die Spannung am invertierenden Eingang des Komparators 107 ansteigt. Wird die Spannung hier größer als die Referenzspannung an der Ausgangsquelle der Konstantspannungsquelle 105, so schaltet der Komparator 107 über die ODER-Schaltung 112 den Transistor T1 aus. Da in diesem Fall auch zunächst noch ein Überspannung vorliegt, ist der Ausgang am Komparator 103 auf negativem Pegel und somit das UND-Gatter 108 gesperrt, so daß auch aus dem Generator 109 keine Pulse über den zweiten Eingang des ODER-Gatters 112 den Transistor T1 durchsteuern könnte. Der Transistor T1 bleibt damit solange abgeschaltet, wie eine Überspannung am Netz vorhanden ist, da die Generatorausgangsspannung über den Komparator 103 und das UND-Gatter 108 blockiert wird.

Erst wenn die Netzspannung wieder einen zulässigen Wert erreicht und unter die Referenzspannung an der Ausgangsklemme der Konstantspannungsquelle 105 sinkt, geht der Ausgang des Komparators 103 wieder auf positiven Pegel und öffnet das UND-Gatter 108, so daß die Ausgangspulse des Generators 109 den Transistor T1 wieder durchsteuern können. Mit dem ersten Ansteuerimpuls des Generators schaltet der Transistor T1 durch und wird - wie eingangs beschrieben - über den Komparator 107 und die Diode D8 im durchgeschalteten Zustand gehalten.

Die für die Komparatoren 103, 107, die Gatterschaltungen 108 und 112 sowie für den Generator 109 erforderliche Versorgungsspannung wird über die Hilfsspannungsquelle 106 aus der gleichgerichteten Netzspannung erzeugt. Selbstverständlich ist es auch möglich, die Versorgung direkt aus der Netzspannung abzuleiten.

Erfolgt die Ansteuerung des Schalttransistors T1 über einen Optokoppler und enthält dieser einen eigenen Brückengleichrichter, so kann - wie im Zusammenhang mit der Ausführungsform nach Fig. 3 beschrieben - diese bevorzugte Ausführungsform der Erfindung auch als eigenständiges Vorschaltmodul für Schaltnetzteile ausgeführt werden.

Selbstverständlich ist es auch möglich, anstelle eines Feldeffekttransistors T1 ein anderes steuerbares Halbleiterbauelement zu verwenden, das aufgrund seines Verhaltens dazu geeignet ist, den Widerstand RM (siehe Fig. 2 und 3) zu ersetzen.

Der wesentliche Vorteil der anhand der Fig. 4 und 5 beschriebenen Schaltung liegt zum einen darin, daß kein Lastwiderstand benötigt wird und somit der Schaltungsaufbau vereinfacht wird (es ist sogar ein Aufbau in Form eines monolitischen IC möglich), zum anderen kann der ohnehin notwendige Schalttransistor T1 auch gleichzeitig als Stromabtast-"Widerstand" verwendet werden, so daß die Schaltung insgesamt einfacher wird.

**Ansprüche**

1. Schutzschaltung für kapazitive Lasten zum Schutz gegen pulsförmige Überspannungen (Störimpulse) im Wechselstrom-Versorgungsnetz, insbesondere solche gemäß DIN VDE 160/01.86, gekennzeichnet durch
eine Stromabtasteinrichtung (11, 13, 14) zum Abtasten des in die Last (10) fließenden Stromes und zum Abgeben eines ersten Sperrsignales mindestens dann, wenn der Betrag des abgetasteten Stroms einen voreingestellten Maximalstrom überschreitet,
eine Spannungsabtasteinrichtung (15 - 18) zum Abtasten der Spannung im Versorgungsnetz und zum Abgeben eines zweiten Sperrsignals dann, wenn der Betrag der abgetasteten Spannung eine voreingestellte Maximalspannung überschreitet, und durch eine steuerbare Schalteinrichtung (12, 19), die derart ausgebildet und in gesteuerter Verbindung mit der Strom- und der Spannungsabtasteinrichtung steht, daß die Last (10) dann vom Versorgungsnetz getrennt wird, wenn mindestens eines der zwei Sperrsignale vorliegt.

2. Schutzschaltung nach Anspruch 1, dadurch gekennzeichnet, daß die Stromabtasteinrichtung (11, 13, 14) eine Verzögerungseinrichtung (R6, C1; R22, C10) umfaßt, die derart ausgebildet ist, daß mindestens nach dem Unterschreiten des Maximalstroms das erste Sperrsignal während einer definierten Verzögerungszeit weiterhin abgegeben wird.

3. Schutzschaltung nach Anspruch 2, dadurch gekennzeichnet, daß die Verzögerungseinrichtung ein RC-Tiefpaßfilter (C1, R6, R7; R22, C10) umfaßt.

4. Schutzschaltung nach einem der vorhergehenden Ansprüche, dadurch gekennzeichnet, daß eine, vom Laststrom beaufschlagte Filteranordnung (L; L1, L2, C5, C6) vorgesehen und derart ausgebildet ist, daß hochfrequente Störspannungen und/oder Rückwirkungen der Last gefiltert werden.

5. Schutzschaltung nach einem der vorhergehenden Ansprüche, dadurch gekennzeichnet, daß der steuerbare Schalter (12) einen (einzigen) Transistor (T1) im Querzweig einer Brückenschaltung aus antiparallel geschalteten Dioden (D4 - D7) umfaßt.

6. Schutzschaltung nach einem der vorhergehenden Ansprüche, dadurch gekennzeichnet, daß die Spannungsabtasteinrichtung (15 - 18) und/oder die Stromabtasteinrichtung (11, 13, 14) einen Optokoppler (20) zum galvanischen Abtrennen des Sperrsignales umfassen.

7. Schutzschaltung nach einem der vorhergehenden Ansprüche, dadurch gekennzeichnet, daß die Strom- und Spannungsabtasteinrichtungen (11, 13, 14; 15 - 18) über eine Stromversorgungseinheit (C, Z1, R1; 18, R13, C7, Z5, R17, C9, Z6, 22) mit elektrischer Energie versorgt werden, in der Energie aus dem Versorgungsnetz speicherbar ist.

8. Schutzschaltung nach einem der vorhergehenden Ansprüche, dadurch gekennzeichnet, daß die steuerbare Schaltereinrichtung eine Oder-Verknüpfungsschaltung (19; V1, V3, R21) umfaßt, deren Eingänge mit den Ausgängen von Komparatoranordnungen (13, 15; V2, 21) zum Erzeugen der beiden Sperrsignale verbunden sind.

9. Schutzschaltung nach einem der vorhergehenden Ansprüche, dadurch gekennzeichnet, daß die Stromabtasteinrichtung (107, 110, D8) mit der Schalteinrichtung (T1) verbunden ist und den Spannungsabfall über die Schalteinrichtung (T1) abtastet, der durch den fließenden Strom entsteht.

10. Verwendung der Vorrichtung nach einem der Ansprüche 1 bis 8 zum Schutz von primär getakteten Netzgeräten gegen Störimpulse.

11. Verwendung nach Anspruch 10, dadurch gekennzeichnet, daß die Schutzschaltung nach dem Eingangsgleichrichter (G) des primär getakteten Netzgerätes aber vor dessen Glättungskondensatoren angeordnet ist.

FIG. 1

FIG.2

FIG.3

# FIG.4

# FIG.5